# FASCICULE DE BREVET EUROPEEN

(11) **EP 2 961 619 B1**
(45) Date de publication et mention de la délivrance du brevet: **05.04.2017**
(21) Numéro de dépôt: 14708210.1
(22) Date de dépôt: 20.02.2014
(51) Int. Cl.: B60C 11/11, B60C 11/13, B60C 11/03

(54) **BANDE DE ROULEMENT AMÉLIORÉE POUR PNEU DE GÉNIE CIVIL**
VERBESSERTE REIFENLAUFFLÄCHE FÜR TIEFBAU
IMPROVED CIVIL ENGINEERING TIRE TREAD

(30) Priorité: 28.02.2013 FR 1351801
(43) Date de publication de la demande: 06.01.2016
(73) Titulaire: Compagnie Générale des Etablissements Michelin, 63000 Clermont-Ferrand (FR); Michelin Recherche et Technique S.A., 1763 Granges-Paccot (CH)
(72) Inventeur: DE-TULLIO, Murielle, F-63040 Clermont-Ferrand Cedex 9 (FR)
(74) Mandataire: Diernaz, Christian
(86) Numéro de dépôt international: PCT/EP2014/053360
(87) Numéro de publication internationale: WO 2014/131692

(56) Documents cités:
- EP-A1- 1 759 890
- EP-A1- 2 390 113
- WO-A1-2012/053227

## Description

### DOMAINE DE L'INVENTION

L'invention concerne une bande de roulement pneu pour véhicule de génie civil (type *"off-the-road"* an anglais), cette bande ayant un dessin de sculpture apte à offrir une meilleure évacuation de la terre tout en conservant de bonnes propriétés en adhérence et en usure.

Parmi les usages des pneus de génie civil, on distingue notamment l'usage de pneus équipant des tombereaux articulés ("*articulated dump truck"* en anglais). Cet usage est particulier puisqu'il nécessite de la part des véhicules une grande capacité de franchissement en terrain meuble et accidenté.

### ÉTAT DE LA TECHNIQUE

De façon usuelle, un pneu, destiné à équiper un véhicule de génie civil, est pourvu d'une bande de roulement surmontant radialement vers l'extérieur une armature de sommet elle-même surmontant une armature de carcasse. Cette bande de roulement comporte une sculpture formée par des éléments de relief (nervures ou blocs), ces éléments de relief étant délimités par une pluralité de rainures.

Les éléments de relief de la bande de roulement ont des faces - dites faces de contact - radialement à l'extérieur de la bande, qui sont prévues pour venir en contact avec le sol. Les rainures ont des profondeurs au plus égales à l'épaisseur de la bande et ont des géométries, vues en section, appropriées pour limiter la rétention de cailloux et autres objets présents sur le sol qui peuvent être emprisonnés dans lesdites rainures.

Lors d'un roulage sur un sol meuble (terre, boue), les rainures se remplissent de terre ce qui peut se révéler préjudiciable sur le plan de la motricité. Il est donc nécessaire que ces rainures après avoir été remplies au passage dans le contact puissent être débarrassées de cette terre afin de présenter un potentiel d'adhérence et de motricité approprié. En effet, les rainures restent remplies de terre lors du passage suivant dans le contact, il devient difficile de pénétrer à nouveau le sol pour développer des forces motrices. La motricité du véhicule s'en trouve donc réduite.

Une solution à ce problème a déjà été mise en oeuvre sur des pneus destinés notamment à des roulages sur sol meuble. Selon cette solution, un pneu comprend une bande de roulement pourvue d'une pluralité de rainures d'orientation circonférentielle et transversale, ces rainures délimitant une pluralité de blocs parmi lesquels on distingue deux rangées de blocs formant les bords de la bande de roulement, ces rangées étant de part et d'autre axialement les plus à l'extérieur de la bande de roulement. Cette solution consiste à décaler axialement vers l'intérieur l'une des faces latérales d'un bloc sur deux des rangées de blocs des bords. En créant ainsi un espace axialement à l'extérieur d'un bloc de bord, il a été constaté qu'il est possible d'éjecter la terre qui peut s'introduire dans les rainures lors du passage dans le contact avec le sol sur lequel roule le pneu.

Cette solution, pour efficace qu'elle soit, a toutefois une limite en adhérence et en motricité puisqu'elle réduit la longueur d'arête d'entrée dans le contact d'un bloc sur deux. Le document WO 2012/053227 divulgue un pneu comprenant les caractéristiques du préambule de la revendication principale.

L'objet de l'invention est de proposer une solution au problème qui vient d'être présenté, à savoir réaliser une sculpture de bande de roulement pour pneu de véhicule génie civil de type tombereau articulé pour lequel la capacité à éliminer la boue ou terre emprisonnée dans les rainures transversales entre les blocs des rangées de bord est améliorée sans toutefois perturber l'adhérence longitudinale et la motricité du véhicule.

### Définitions :

Un bloc est un élément en relief formé sur une bande de roulement, cet élément étant délimité par des creux ou rainures et comprenant une face de contact, cette face de contact étant destinée à venir en contact avec le sol pendant le roulage, des faces latérales et des faces avant et arrière. Chaque bloc des rangées de bord de la bande de roulement comprend une paroi latérale axialement externe et une paroi latérale axialement interne, cette dernière faisant face à une rainure circonférentielle. Les deux faces latérales sont espacées l'une de l'autre dans la direction transversale d'une distance maximale correspondant à la largeur transversale du bloc. On distingue une face avant et une face arrière, dites aussi face d'attaque et face de fuite respectivement, ces faces délimitant des rainures transversales. Ces faces d'attaque et de fuite coupent la face de contact, respectivement, selon une arête d'attaque et une arête de fuite. L'arête d'attaque correspond à l'arête qui entre la première dans la zone de contact avec le sol lors du roulage.

Par arête active à l'état neuf, on entend dans le présent document une arête présente sur la surface de roulement de la bande de roulement à l'état neuf.

Une nervure est un élément en relief formé sur une bande de roulement, cet élément s'étendant dans la direction circonférentielle et faisant le tour du pneu. Une nervure comprend deux parois latérales et une face de contact, cette dernière étant destinée à venir en contact avec la chaussée pendant le roulage.

Par direction radiale, on entend une direction qui est perpendiculaire à l'axe de rotation du pneu (cette direction correspond à la direction de l'épaisseur de la bande de roulement).

Par direction transversale ou axiale, on entend une direction parallèle à l'axe de rotation du pneu.

Par direction circonférentielle, on entend une direction qui est tangente à tout cercle centré sur l'axe de rotation. Cette direction est perpendiculaire à la fois à la direction axiale et à une direction radiale.

Les conditions usuelles de roulage du pneu ou conditions d'utilisation sont celles qui sont définies en Europe par la norme E.T.R.T.O. ; ces conditions d'utilisation précisent la pression de gonflage de référence correspondant à la capacité de charge du pneu indiquée par son indice de charge et son code vitesse. Ces conditions d'utilisation peuvent aussi être dites "conditions nominales" ou "conditions d'usage".

### BREF EXPOSÉ DE L'INVENTION

L'invention a pour objet une bande de roulement pour pneu pour véhicule de génie civil, cette bande en matériau caoutchouc étant pourvue de rainures circonférentielles et de rainures transversales, ces rainures ayant une profondeur et une largeur et délimitant une pluralité d'éléments de relief formant une surface de roulement et comprenant notamment deux rangées de bord de la bande pourvues chacune d'une pluralité de blocs limitant axialement la bande sur une largeur axiale maximale correspondant à la largeur de contact dans les conditions d'usage. Les blocs de chaque rangée de bord de la bande délimitent deux à deux une rainure d'orientation générale transversale s'ouvrant à la fois sur une rainure circonférentielle et sur l'extérieur de la bande.

Chaque bloc des rangées de bord comprend une face de contact destinée à venir en contact avec un sol, deux faces latérales - une face latérale externe et une face latérale interne, ainsi qu'une face avant et une face arrière, ces faces avant et arrière étant espacées l'une de l'autre dans la direction circonférentielle, la face avant et la face arrière coupant la face de contact selon respectivement une arête avant et une arête arrière. Les blocs de chaque rangée de bord sont formés de façon que leurs faces latérales externes soient toutes à une même distance d'un plan équatorial divisant la bande en deux moitiés de bande de même largeur.

La bande a une largeur axiale maximale qui correspond à la distance axiale maximale entre les faces latérales externes des blocs des rangées de bord.

La bande selon l'invention est telle que la largeur des rainures transversales entre les blocs des rangées de bord, cette largeur étant mesurée sur la surface de roulement à l'état neuf, augmente progressivement au moins à partir d'une distance non nulle mesurée à partir d'un plan parallèle au plan équatorial et passant par les points les points axialement les plus à l'extérieur des faces latérales externes des blocs des rangées de bord de la bande.

Cette bande est caractérisée en ce que, chaque bloc des rangées de bord ayant une longueur circonférentielle maximale Lc, l'augmentation maximale de largeur de rainure transversale (1) est au moins égale à 20% de cette longueur circonférentielle maximale Lc et au plus égale à 50% de cette longueur circonférentielle maximale Lc.

Au-dessous de 20%, l'effet n'est pas assez marqué tandis qu'au-dessus de 50% la rigidité du bloc peut s'en trouver affectée - c'est-à-dire réduite - au point d'augmenter la vitesse de l'usure.

Par rainure d'orientation générale transversale, on entend dans le présent document une rainure dont la direction n'est pas circonférentielle, c'est-à-dire ne fait pas le tour du pneu lorsque la bande selon l'invention équipe un pneu. Une rainure d'orientation transversale peut donc être orientée transversalement ou encore faire un angle plus grand que zéro degré avec la direction transversale. Dans la pratique, cet angle fait au plus 45 degrés avec la direction transversale.

Grâce à l'invention, il est possible de faire travailler les bords de la bande de roulement dans des conditions favorables sur sol boueux tout en permettant l'élimination régulière des matériaux capturés entre des blocs de la région de bord de la bande de roulement.

Selon une variante aisée à mettre en oeuvre, l'augmentation de la largeur des rainures transversales entre les blocs des rangées de bord est linéaire et croissante en allant vers l'extérieur de la rangée de bord.

Avantageusement, sur au moins un bloc sur deux des rangées de bord au moins l'arête avant ou l'arête arrière comprend une partie rectiligne inclinée par rapport à la direction circonférentielle selon un angle au moins égal à 5° et au plus égal à 30°, cette partie rectiligne inclinée se raccordant à la face latérale externe du bloc.

Selon une autre variante intéressante, la variation de la largeur des rainures transversales entre les bords des rangées de bord est telle que, sur la bande à l'état neuf, au moins l'arête avant ou l'arête arrière d'un bloc suit une courbe curviligne à partir d'une distance non nulle mesurée à partir de la limite axiale de la bande et jusqu'à la limite axiale de la bande.

Préférentiellement, la distance, à partir de laquelle la largeur des rainures transversales entre les blocs des rangées de bord augmente, est au moins égale à 10 mm et au plus égale à 50% de la longueur axiale d'un bloc de bord, cette longueur axiale étant mesurée dans la direction axiale entre les points dudit bloc les plus éloignés axialement. La distance est prise par rapport points de la face de contact axialement les plus à l'extérieur.

Dans une autre variante intéressante de l'invention, il est intéressant de combiner l'une quelconque des dispositions précédentes avec des angles de dépouilles des faces des blocs des rangées de bord tels que la longueur totale d'arêtes sur la face de contact des blocs augmente avec l'usure de la bande.

Pour obtenir une augmentation significative de longueur d'arêtes au fur et à mesure de l'usure de la bande, il est possible de prévoir qu'au moins une face latérale se dédouble en partant de la face de contact à l'état neuf.

Il a été observé que l'invention est particulièrement appropriée pour les bandes de roulement ayant de fortes épaisseurs et notamment des épaisseurs supérieures à 38 mm (par épaisseur, on entend la hauteur maximale de matière qui peut être usée en roulage).

D'autres caractéristiques et avantages de l'invention ressortent de la description faite ci-après en référence aux dessins annexés qui montrent, à titre d'exemples non limitatifs, des variantes de réalisation de l'objet de l'invention.

### BRÈVE DESCRIPTION DES FIGURES

La figure 1 montre une vue en plan d'une partie de bord d'une bande de roulement selon un art antérieur ;
La figure 2 montre une vue en plan d'une partie de bord d'une bande de roulement selon un premier mode de réalisation de l'invention ;
La figure 3 montre une vue locale en perspective de la variante montrée avec la figure 2 ;
La figure 4 montre une vue en plan d'une partie de bord d'une bande de roulement selon un deuxième mode de réalisation de l'invention ;
La figure 5 montre une vue locale en perspective d'un bloc de bord selon une quatrième variante de réalisation de l'invention.

### DESCRIPTION DES FIGURES

Pour les figures accompagnant cette description, des mêmes signes de référence sont employés pour décrire des variantes de l'invention dès lors que ces signes de référence renvoient à des éléments d'une même nature, que cette nature soit structurelle ou bien fonctionnelle.

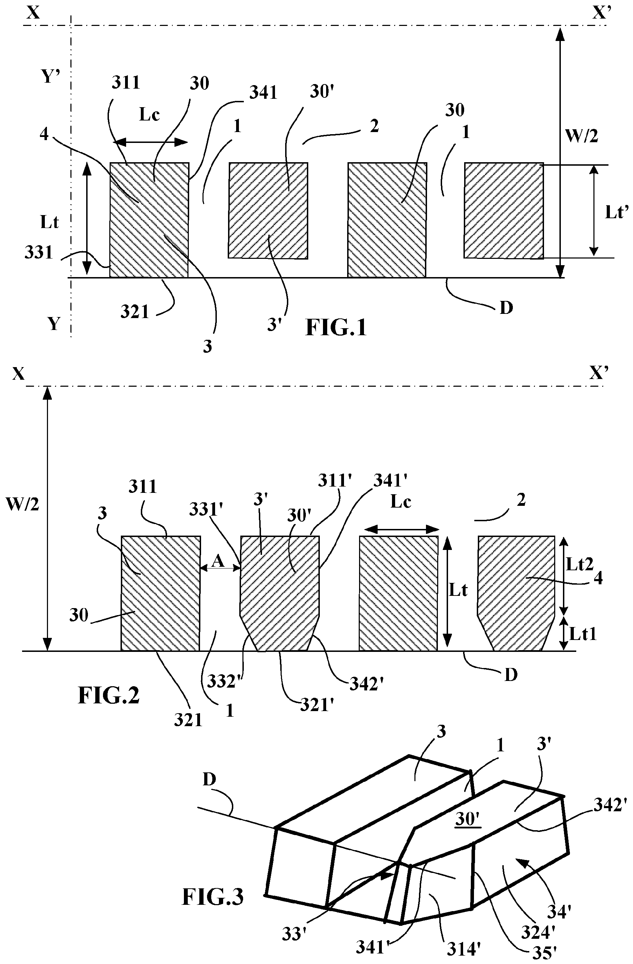

La figure 1 montre une vue en plan d'une partie seulement d'une rangée de bord d'une bande de roulement selon un art antérieur. Selon cet art antérieur, des rainures transversales 1 délimitent avec une rainure circonférentielle 2 une pluralité de blocs 3 formant sur un bord de la bande de roulement une rangée de bord 4. Les blocs 3, 3' de cette rangée sont espacés dans la direction circonférentielle. Les blocs 3, 3' ici représentés ont chacun une longueur transversale Lt ou Lt' respectivement, ces longueurs étant mesurées selon la direction transversale indiquée par la ligne YY' et une même longueur circonférentielle Lc mesurée dans la direction circonférentielle indiquée par la ligne XX'. Cette ligne XX' figure également la trace du plan médian divisant la bande en deux moitiés de bande de même largeur W/2.

Une ligne droite D sur cette figure 1 indique la limite axiale maximale de la surface de roulement de la bande de roulement. Chaque bloc 3, 3' comprend une face de contact 30, 30' respectivement, destinée à venir en contact avec le sol pendant le roulage, cette face de contact 30, 30' étant délimitée par des arêtes formées par l'intersection de la face de contact avec des faces latérales dudit bloc 3, 3'. Chaque bloc comprend une face avant et une face arrière, ces faces avant et arrière étant espacées l'une de l'autre dans la direction circonférentielle par une distance Lc, et deux faces latérales, une face latérale interne délimitant la rainure circonférentielle 2 et une face latérale externe axialement à l'extérieur de la bande.

La face avant d'un bloc et la face arrière d'un bloc voisin d'une même rangée délimitent une rainure transversale 1 s'ouvrant à la fois dans la rainure circonférentielle 2 et à l'extérieur de la bande de roulement.

Lors de roulage, il a été constaté que les rainures transversales 1 pouvaient se remplir de matières comme de la boue et que la présence de ces matières générait une perte de motricité puisqu'il n'est plus possible de pénétrer le sol avec les éléments de relief pour cisailler le sol au passage suivant dans le contact. En vue de réaliser l'éjection des matières présentes dans ces rainures transversales, il est connu, comme cela est montré avec la variante de la figure 1, de réduire la longueur transversale d'un bloc sur deux. Certains blocs 3 ont leur face latérale externe qui se termine au niveau de la ligne D et ont une longueur transversale Lt tandis que les autres blocs 3' ont une longueur transversale Lt' inférieure à Lt. Ces derniers blocs 3' se terminent axialement vers l'intérieur par rapport à la ligne D, c'est-à-dire vers le plan médian de la bande figuré par la ligne XX'.

Grâce à cet arrangement, il est possible d'éjecter la matière emprisonnée dans chaque rainure transversale de la rangée de bord lors du roulage ; toutefois, cela ne peut se faire qu'au détriment de l'adhérence puisqu'il y a réduction de la longueur des arêtes avant et arrière (c'est-à-dire des arêtes orientées transversalement) d'un bloc sur deux à l'état neuf

L'invention telle que réalisée dans une première variante montrée avec la figure 2 permet à la fois d'obtenir une bonne éjection des matières boueuses pouvant être emmagasinées dans les rainures transversales tout en retrouvant une plus grande longueur d'arêtes transversales.

Selon cette première variante, les blocs 3 des rangées de bord 4 d'une bande de roulement pour pneu d'engin de génie civil ont tous une même longueur transversale Lt et sont délimités par des rainures transversales 1 et une rainure circonférentielle 2. Ces rainures ont une même profondeur.

Selon cette première variante, une pluralité de blocs 3 comprennent chacun une face de contact 30 et quatre faces latérales et ont une forme parallélépipédique. Ces blocs 3 de forme parallélépipédique ont une face de contact 30 délimitée par des arêtes 311 et 321, ces arêtes étant orientées selon la direction XX'. Ces mêmes blocs ont des arêtes avant et arrière 331, 341, ces arêtes étant perpendiculaires à la direction XX'.

Entre deux blocs 3 de forme parallélépipédique il est intercalé un bloc tronqué 3' comprenant six faces latérales coupant une face de contact 30'. Parmi les faces latérales d'un bloc tronqué 3', on distingue une face latérale interne délimitant la rainure circonférentielle 2 et une face latérale externe dont l'intersection avec la face de contact forme une arête située à une même distance W/2 du plan médian XX' que la face latérale externe des blocs 3 de forme parallélépipédique.

Les blocs tronqués 3' ont une face latérale interne coupant la face de contact 30' selon deux arêtes latérales 311', 321' parallèles à la direction circonférentielle (direction indiquée par la ligne XX'). En outre, chaque bloc tronqué 3' comprend des faces latérales avant et arrière coupant chacune la face de contact 30' selon une arête formée de deux segments, respectivement 331', 332' et 341', 342'.

Chaque segment 331', 332', (respectivement 341', 342') de ces arêtes fait un angle différent et non nul avec la direction circonférentielle XX'. Un premier segment 331', 341' prend naissance sur l'arête 311' que fait la face latérale interne avec la face de contact en faisant un angle de 90 degrés avec la direction circonférentielle et un second segment 332', 342' prolonge les premiers segments, respectivement, en faisant un angle de 15 degrés avec la direction circonférentielle. Ces seconds segments 332', 342' prennent naissance à une distance Lt1 mesurée à partir de la droite D reliant les arêtes formées par les faces latérales externes avec les faces de contact.

La géométrie des blocs tronqués 3' permet de délimiter avec un bloc parallélépipédique 3 une rainure transversale 1 dont la largeur A - mesurée dans la direction circonférentielle - est constante sur une longueur transversale Lt2 en partant de la rainure circonférentielle 2 délimitant lesdits blocs et est croissante de façon linéaire sur une longueur **Lt1** jusqu'aux points axialement les plus à l'extérieur des blocs tronqués 3' (ces points sont situés sur une droite D indiquée sur la figure 2).

Dans le cas présenté ici, la variation de largeur de chaque rainure transversale est linéaire et croissante en se rapprochant de la droite D. Si on note Lc la longueur circonférentielle maximale de chacun des blocs 3, 3', l'augmentation de largeur de rainure transversale est égale à 30% de la longueur circonférentielle maximale Lc.

Préférentiellement, l'angle d'inclinaison de la partie d'arête entre **Lt1** et **Lt** est pris comme étant au moins égal à 5° et au plus égal à 30°.

Les arêtes avant 331' et arrière 332' des blocs 3' des rangées de bord de la bande contribuent lors du roulage à l'adhérence circonférentielle sur une longueur au moins égale à celle des arêtes avant et arrière des autres blocs 3.

L'arête 321' formée par l'intersection de la face latérale externe avec la face de contact des blocs tronqués 3' a une longueur circonférentielle réduite par rapport à la longueur circonférentielle de l'arête 311' formée par l'intersection de la face latérale interne avec la même face de contact.

Si la figure 2 ne montre que la surface de roulement à l'état neuf, il va sans dire que l'augmentation de la largeur des rainures transversales 1 est aussi effective sur quasiment toute la profondeur desdites rainures quand bien même les faces latérales sont formées avec des angles de dépouilles non nuls (par dépouille on entend ici que les faces avant et arrière d'un bloc font un angle différent de 90 degrés avec la face de contact de ce bloc).

Il est préférable que la largeur circonférentielle des rainures transversales augmente sur au moins 50% de la profondeur de la rainure de façon à maintenir une efficacité d'éjection des matières susceptibles d'être captées à l'intérieur desdites rainures pendant le roulage.

La variante de bande de roulement montrée avec la figure 2 ne présente pas de sens préférentiel de roulage.

La figure 3 montre une vue locale en perspective de la variante montrée avec la figure 2. Sur cette figure 3, on voit un bloc de forme parallélépipédique 3 et un bloc tronqué 3' séparé par une rainure 1. Chaque bloc tronqué 3' a une face latérale avant 33' et une face latérale arrière 34' formées chacune de deux faces élémentaires formant un angle entre elle, dans le cas présent inférieur à 180 degrés. La face arrière latérale 34' est formée de deux facettes 314' et 324' se coupant selon une arête 35'.

Dans cette première variante, chaque bloc a une longueur circonférentielle maximale Lc et l'augmentation maximale de largeur de rainure transversale (mesurée à l'extrémité axialement externe sur la ligne D) est au moins égale à 20% de longueur circonférentielle maximale Lc et au plus égale à la moitié de la longueur circonférentielle Lc.

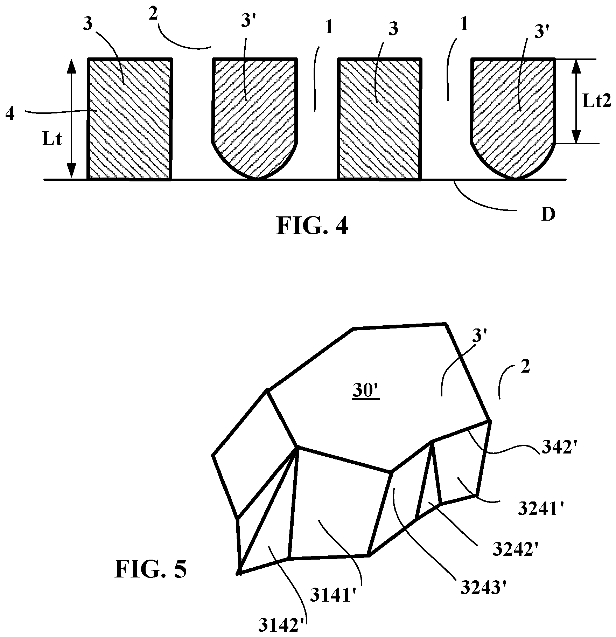

La figure 4 montre une vue en plan d'une partie de bord d'une bande de roulement selon un deuxième mode de réalisation de l'invention. Cette figure 4 reprend la disposition des blocs 3, 3' de la rangée de bord 4 montrée avec la figure 2 en modifiant la forme de la face avant et de la face arrière des blocs tronqués 3' disposés en alternance avec des blocs parallélépipédiques 3. Selon cette variante, la face avant et la face arrière sont planes à partir de la rainure circonférentielle 2 et sur une longueur transversale **Lt2** inférieure à la longueur transversale totale **Lt**, puis elles deviennent courbes de manière à ce que la largeur des rainures transversales 1 augmente. Ces parties courbes des faces avant et arrière se raccordent tangentiellement au plus à l'extérieur transversalement de chaque bloc tronqué 3'. La ligne droite D passe par les points axialement les plus à l'extérieur des blocs 3, 3' de la rangée de bord.

Dans tous les exemples de réalisation décrits, il a été choisi d'obtenir une variation de largeur de rainure transversale par la modification de la géométrie d'un bloc sur deux : il est bien entendu tout à fait aisé de réaliser cette variation de largeur de rainure par de semblables modifications appliquées à tous les blocs des rangées de bord.

Dans la présente description, il est employé par commodité la terminologie « face avant, face arrière » d'un bloc, dès lors que la bande selon l'invention est destinée à équiper un pneu destiné à rouler donc à présenter un sens de roulage. Bien entendu, il est aisé à l'homme du métier de choisir - dans le cas où la sculpture présente un sens préférentiel de roulage -quelle est la face qui doit être modifiée pour obtenir la variation de largeur de rainure nécessaire à une bonne évacuation des matières pouvant être emprisonnées dans ladite rainure.

Dans une variante non représentée, la variation de largeur de rainure peut être croissante régulièrement sur toute la longueur **Lt** de ladite rainure.

La figure 5 montre une vue locale en perspective d'un bloc tronqué 3' d'une rangée de bord selon une troisième variante de réalisation de l'invention.

Dans cette troisième variante permettant une amélioration de l'adhérence avec l'usure, outre l'augmentation de la largeur de chaque rainure transversale, chaque face avant et arrière des blocs tronqués 3' se dédouble en partant de la face de contact à l'état neuf de façon à ce que la longueur totale des arêtes de la face de contact des blocs augmente très significativement lorsque l'usure de la bande progresse. Dans la partie visible sur cette figure 5 la face latérale délimitant avec un autre bloc une rainure transversale se décompose en plusieurs facettes 3241', 3242', 3243', la facette intermédiaire 3242' étant de forme triangulaire dont un sommet est situé sur la face de contact 30' à l'état neuf. La partie du bloc sur laquelle la largeur de la rainure transversale augmente est formée de deux facettes 3141' et 3142', cette dernière étant de forme triangulaire dont un sommet est situé sur la face de contact 30' à l'état neuf.

Cette invention sous la forme de la première variante présentée dans le présent document a été mise en oeuvre dans une bande de roulement pour un pneu de génie civil de dimension **800/80 R 29.** Cette bande de roulement est pourvue d'une sculpture comprenant quatre rangées circonférentielles de blocs délimités par des rainures circonférentielles et des rainures transversales, deux rangées de bord et deux rangées intermédiaires. L'épaisseur de matière à user est ici égale à 38 mm, ce qui correspond sensiblement à la profondeur des rainures. Grâce à l'invention on a pu constater une amélioration significative de la motricité et de l'adhérence tout en obtenant une performance en usure satisfaisante.

## Revendications

1. Bande de roulement pour pneu de génie civil, cette bande en matériau caoutchouc étant pourvue de rainures circonférentielles (2) et de rainures transversales (1), ces rainures ayant une profondeur et une largeur et délimitant une pluralité d'éléments de relief formant une surface de roulement et comprenant notamment deux rangées de bord de la bande pourvues chacune d'une pluralité de blocs (3, 3') limitant axialement la bande sur une largeur axiale maximale correspondant à la largeur de contact dans les conditions d'usage, les blocs (3, 3') de chaque rangée de bord de la bande délimitant deux à deux une rainure d'orientation (1) générale transversale s'ouvrant à la fois sur une rainure circonférentielle (2) et sur l'extérieur de la bande, chaque bloc des rangées de bord comprenant une face de contact (30, 30') destinée à venir en contact avec un sol, deux faces latérales - une face latérale externe et une face latérale interne, ainsi qu'une face avant et une face arrière, ces faces avant et arrière étant espacées l'une de l'autre dans la direction circonférentielle, la face avant et la face arrière coupant la face de contact selon respectivement une arête avant et une arête arrière, les blocs de chaque rangée de bord étant formés de façon que leurs faces latérales externes soient toutes à une même distance d'un plan équatorial divisant la bande en deux moitiés de bande de même largeur, la bande ayant une largeur axiale maximale correspondant à la distance axiale maximale entre les faces latérales externes des blocs (3, 3') des rangées de bord, cette bande étant telle que la largeur des rainures transversales (1) entre les blocs (3, 3') des rangées de bord, cette largeur étant mesurée sur la surface de roulement, augmente progressivement au moins à partir d'une distance non nulle mesurée à partir d'un plan parallèle au plan équatorial et passant par les points axialement les plus à l'extérieur des faces latérales externes des blocs des rangées de bord de la bande, cette bande étant **caractérisée en ce que** chaque bloc ayant une longueur circonférentielle maximale Lc, l'augmentation maximale de largeur de rainure transversale (1) est au moins égale à 20% de cette longueur circonférentielle maximale Lc et au plus égale à 50% de cette longueur circonférentielle maximale Lc.

2. Bande de roulement selon la revendication 1 **caractérisée en ce que** l'augmentation de largeur de rainure est linéaire et croissante en allant vers l'extérieur de la rangée de bord (4).

3. Bande de roulement selon la revendication 2 **caractérisée en ce que** sur au moins un bloc sur deux des rangées de bord au moins l'arête avant ou l'arête arrière comprend une partie rectiligne inclinée par rapport à la direction circonférentielle selon un angle au moins égal à 5° et au plus égal à 30°, cette partie rectiligne inclinée se raccordant à la face latérale externe du bloc.

4. Bande de roulement selon la revendication 1 **caractérisée en ce que** la variation de la largeur des rainures transversales entre les bords des rangées de bord est telle que, sur la bande à l'état neuf, au moins l'arête d'attaque ou l'arête de fuite d'un bloc suit une courbe curviligne à partir d'une distance non nulle mesurée à partir de la limite axiale de la bande et jusqu'à la limite axiale de la bande.

5. Bande de roulement selon la revendication 4 **caractérisée en ce que** la distance, à partir de laquelle les rainures transversales entre les blocs des rangées de bord augmente, est au moins égale à 10 mm et au plus égale à 50% de la longueur axiale d'un bloc de bord, cette longueur étant mesurée dans la direction axiale entre les points axialement les plus éloignés.

6. Bande de roulement selon l'une des revendications 1 à 5 **caractérisée en ce que** la longueur totale d'arêtes sur la face de contact des blocs des rangées de bord augmente avec l'usure de la bande.

7. Bande de roulement selon l'une des revendications 1 à 6 **caractérisée en ce que** l'épaisseur de la bande est au moins égale à 38 mm.

## Patentansprüche

1. Lauffläche für Baufahrzeugreifen, wobei diese Fläche aus Kautschukmaterial mit Umfangsrillen (2) und transversalen Rillen (1) versehen ist, wobei diese Rillen eine Tiefe und eine Breite besitzen und mehrere Reliefelemente begrenzen, die eine Rollfläche bilden und insbesondere zwei Randreihen der Fläche umfassen, die jeweils mit mehreren Blöcken (3, 3') versehen sind, die die Fläche axial auf einer maximalen axialen Breite begrenzen, die unter Verwendungsbedingungen der Kontaktbreite entspricht, wobei die Blöcke (3, 3') jeder Randreihe der Fläche paarweise eine Rille (1) mit im Allgemeinen transversaler Orientierung begrenzen, die sowohl in eine Umfangsrille (2) als auch in die äußere Umgebung der Fläche mündet, wobei jeder Block der Randreihen eine Kontaktfläche (30, 30'), die dazu bestimmt ist, mit einem Boden in Kontakt zu gelangen, zwei Seitenflächen, nämlich eine äußere Seitenfläche und eine innere Seitenfläche, sowie eine vordere Fläche und eine hintere Fläche umfasst, wobei diese vordere und diese hintere Fläche in Umfangsrichtung voneinander beabstandet sind, wobei die vordere Fläche und die hintere Fläche die Kontaktfläche längs einer Vorderkante bzw. einer Hinterkante schneidet, wobei die Blöcke jeder Randreihe in der Weise gebildet sind, dass sich alle ihre äußeren seitlichen Flächen im selben Abstand von einer Äquatorialebene befinden, die die Fläche in zwei Flächenhälften mit gleicher Breite unterteilt, wobei die Fläche eine maximale axiale Breite besitzt, die dem maximalen axialen Abstand zwischen den äußeren seitlichen Flächen der Blöcke (3, 3') der Randreihen entspricht, wobei diese Fläche derart ist, dass die Breite der transversalen Rillen (1) zwischen den Blöcken (3, 3') der Randreihen, wobei diese Breite auf der Rollfläche gemessen wird, wenigstens ausgehend von einem von null verschiedenen Abstand, der ausgehend von einer Ebene parallel zu der Äquatorialebene gemessen wird und durch die äußersten axialen Punkte der äußeren seitlichen Flächen der Blöcke von Randreihen der Fläche verlaufen, allmählich zunimmt, wobei diese Fläche **dadurch gekennzeichnet ist, dass** jeder Block eine maximale Umfangslänge Lc besitzt, wobei die maximale Zunahme der Breite der transversalen Rille (1) wenigstens gleich 20 % dieser maximalen Umfangslänge Lc und höchstens gleich 50 % dieser maximalen Umfangslänge Lc ist.

2. Lauffläche nach Anspruch 1, **dadurch gekennzeichnet, dass** die Zunahme der Breite der Rille linear ist und zur Außenseite der Randreihe (4) wächst.

3. Lauffläche nach Anspruch 2, **dadurch gekennzeichnet, dass** bei wenigstens einem Block von zwei Blöcken der Randreihen die Vorderkante und/oder die Hinterkante einen geradlinigen Teil aufweisen, der in Bezug auf die Umfangsrichtung unter einem Winkel geneigt ist, der im Bereich von wenigstens 5° und höchstens 30° liegt, wobei dieser geneigte geradlinige Teil mit der äußeren seitlichen Fläche des Blocks verbunden ist.

4. Lauffläche nach Anspruch 1, **dadurch gekennzeichnet, dass** die Veränderung der Breite der transversalen Rillen zwischen dem Rand der Randreihen derart ist, dass auf einer Fläche im neuen Zustand wenigstens die Angriffskante oder die Auslaufkante eines Blocks ausgehend von einem von null verschiedenen Abstand, der ausgehend von der axialen Grenze der Fläche und bis zu der axialen Grenze der Fläche gemessen wird, einer gekrümmten Bahn folgt.

5. Lauffläche nach Anspruch 4, **dadurch gekennzeichnet, dass** der Abstand, ausgehend von dem die transversalen Rillen zwischen den Blöcken der Randreihen zunehmen, wenigstens gleich 10 mm und höchstens gleich 50 % der axialen Länge eines Randblocks ist, wobei diese Länge in axialer Richtung zwischen den am weitesten entfernten axialen Punkten gemessen wird.

6. Lauffläche nach einem der Ansprüche 1 bis 5, **dadurch gekennzeichnet, dass** die Gesamtlänge von Kanten auf der Kontaktfläche der Blöcke der Randreihen mit dem Verschleiß der Fläche zunimmt.

7. Lauffläche nach einem der Ansprüche 1 bis 6, **dadurch gekennzeichnet, dass** die Dicke der Fläche wenigstens gleich 38 mm beträgt.

## Claims

1. Tread for a civil engineering tyre, this tread made of rubber being provided with circumferential grooves (2) and transverse grooves (1), these grooves having a depth and a width and delimiting a plurality of raised elements forming a tread surface and notably comprising two edge rows of the tread each of which is provided with a plurality of blocks (3, 3') axially bounding the tread over a maximum axial width corresponding to the contact width in the conditions of use, the blocks (3, 3') of each edge row of the tread in pairs delimiting a groove (1) of transverse overall orientation opening both onto a circumferential groove (2) and to the outside of the tread, each block of the edge rows comprising a contact face (30, 30') intended to come into contact with the ground, two lateral faces - an external lateral face and an internal lateral face, as well as a front face and a rear face, these front and rear faces being spaced apart in the circumferential direction, the front face and the rear face intersecting the contact face along the front edge corner and a rear edge corner respectively, the blocks of each edge row being formed in such a way that their external lateral faces all lie the same distance from an equatorial plane that divides the tread into two tread halves of equal width, the tread having a maximum axial width corresponding to the maximum axial distance between the external lateral faces of the blocks (3, 3') of the edge rows, this tread being such that the width of the transverse grooves (1) between the blocks (3, 3') of the edge rows, this width being measured on the tread surface, increases progressively at least from a non-zero distance measured from a plane parallel to the equatorial plane and passing through the axially outermost points of the external lateral faces of the blocks of the edge rows of the tread, this tread being **characterized in that**, with each block having a maximum circumferential length Lc, the maximum increase in width of the transverse groove (1) is at least equal to 20% of this maximum circumferential length Lc and at most equal to 50% of this maximum circumferential length Lc.

2. Tread according to Claim 1, **characterized in that** the increase in width of the groove is linear and increasing in the direction of the outside of the edge row (4).

3. Tread according to Claim 2, **characterized in that** on at least one block in two of the edge rows at least the front edge corner or the rear edge corner comprises a rectilinear part that is inclined with respect to the circumferential direction at an angle at least equal to 5° and at most equal to 30°, this inclined rectilinear part meeting the external lateral face of the block.

4. Tread according to Claim 1, **characterized in that** the variation in width of the transverse grooves between the edges of the edge rows is such that, on the tread as new, at least the leading edge corner or the trailing edge corner of a block follows a curvilinear path from a non-zero distance measured from the axial limit of the tread and up to the axial limit of the tread.

5. Tread according to Claim 4, **characterized in that** the distance, from which the transverse grooves between the blocks of the edge rows increases, is at least equal to 10 mm and at most equal to 50% of the axial length of an edge block, this length being measured in the axial direction between the axially furthermost points.

6. Tread according to one of Claims 1 to 5, **characterized in that** the total length of edge corners on the contact face of the blocks of the edge rows increases with tread wear.

7. Tread according to one of Claims 1 to 6, **characterized in that** the tread thickness is at least equal to 38 mm.
